(19) Europäisches Patentamt / European Patent Office / Office européen des brevets

(11) **EP 2 732 279 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(21) Anmeldenummer: **12753376.8**

(22) Anmeldetag: **16.07.2012**

(51) Int Cl.:
**G01N 27/90** (2006.01)   **G01R 23/16** (2006.01)
**G06F 17/14** (2006.01)

(86) Internationale Anmeldenummer:
**PCT/AT2012/050107**

(87) Internationale Veröffentlichungsnummer:
**WO 2013/010202 (24.01.2013 Gazette 2013/04)**

(54) **VORRICHTUNG UND VERFAHREN ZUR DETEKTION WENIGSTENS EINES PERIODISCH AUFTRETENDEN FEHLERS AN EINEM GEGENSTAND**

APPARATUS AND METHOD FOR DETECTING AT LEAST ONE PERIODICALLY OCCURRING DEFECT ON AN OBJECT

DISPOSITIF ET PROCÉDÉ DE DÉTECTION D'AU MOINS UN DÉFAUT APPARAISSANT PÉRIODIQUEMENT SUR UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2011   AT 10432011**

(43) Veröffentlichungstag der Anmeldung:
**21.05.2014   Patentblatt 2014/21**

(73) Patentinhaber: **voestalpine Stahl GmbH**
**4020 Linz (AT)**

(72) Erfinder:
- **PFATSCHBACHER, Thomas**
  **A-4202 Kirchschlag (AT)**
- **REISINGER, Johann**
  **A-4040 Plesching-Steyregg (AT)**
- **GSTÖTTENBAUER, Norbert**
  **A-4209 Engerwitzdorf (AT)**
- **SCHUSTER, Stefan**
  **A-4470 Enns (AT)**
- **FEISTE, Karsten Lothar**
  **30171 Hannover (DE)**

(74) Vertreter: **Jell, Friedrich**
**Bismarckstrasse 9**
**4020 Linz (AT)**

(56) Entgegenhaltungen:
**JP-A- 6 324 005     JP-A- 2006 105 791
US-A- 4 958 307**

- **T. G. Kincaid ET AL: "Technical report: The Estimation of Periodic Signals in Noise", , 1. Februar 1968 (1968-02-01), Seiten 1-33, XP55041076, Gefunden im Internet: URL:http://www.dtic.mil/dtic/tr/fulltext/u 2/666580.pdf [gefunden am 2012-10-15]**
- **"2.4" In: M.G. Christensen , A. Jakobsson: "Multi-pitch estimation", 2009, Morgan & Claypool, XP002685281, ISBN: 9781598298383 Seiten 29-33, in der Anmeldung erwähnt das ganze Dokument**
- **REISINGER J ET AL: "VOLLSTAENDIGE KANTENPRUEFUNG VON WALZPRODUKTEN DURCH VERBESSERTE INSPEKTIONSTECHNIK//COMPLETE EDGE TESTING OF ROLLED MATERIAL WITH IMPROVED INSPECTION TECHNIQUE", STAHL UND EISEN, VERLAG STAHLEISEN, DUSSELDORF, DE, Bd. 122, Nr. 10, 15. Oktober 2002 (2002-10-15), Seiten 53-55, XP001144403, ISSN: 0340-4803**

EP 2 732 279 B1

**Beschreibung**

Die Erfindung handelt von einer Vorrichtung und einem Verfahren zur Detektion wenigstens eines periodisch auftretenden Fehlers an einem Gegenstand, insbesondere an einem Metallband, bei dem mit einem Messverfahren vom bewegten Gegenstand wenigstens ein Zeitsignal aufgenommen, das Zeitsignal unter Anwendung eines stochastischen Verfahrens in eine Gütefunktion umgewandelt und auf Grundlage dieser Gütefunktion auf ein oder mehrere periodische Signale im Zeitsignal rückgeschlossen wird, um damit wenigstens einen periodisch auftretenden Fehler am Gegenstand festzustellen.

Um periodische Walzzeichen an einem Metallband detektieren zu können, schlägt die DE3855913T2 vor, Messsignale bzw. Zeitsignale, die durch eine Kamera optisch aufgenommen werden, einem Autokorrelationsverfahren zu unterwerfen. Solch ein stochastisches Verfahren führt nun dieses Zeitsignal in eine Gütefunktion über, womit periodische Signale erkannt und auf Walzzeichen bzw. Bandfehler rückgeschlossen werden kann. Im Allgemeinen wird erwähnt, dass die Gütefunktion in Abhängigkeit vom wahren Wert des zu prüfenden Parameters die Wahrscheinlichkeit der Ablehnung der Nullhypothese angibt, veranschaulicht also die Fähigkeit des Parametertests, eine falsche Hypothese als falsch bzw. eine richtige als richtig zu erkennen. Von Nachteil bei einem derartigen Autokorrelationsverfahren ist, dass prozessbedingte Schwankungen erheblichen Einfluss auf die Detektionsrate des Autokorrelationsverfahrens haben können. Dabei kann auch eine Berücksichtigung der Bandgeschwindigkeit des Metallbands keine wesentliche Verbesserung der Detektionsrate bringen. Außerdem weisen Autokorrelationsverfahren bei einer Detektion von, in den geometrischen Abmessungen vergleichsweise kleinen Bandfehlern sowie bei einer Detektion von mehr als einem periodisch auftretenden Fehler erhebliche Probleme auf, wodurch ein standfestes Verfahren nicht sichergestellt werden kann.

Die Erfindung hat sich daher die Aufgabe gestellt, ein Verfahren zur Detektion von Bandfehlern der eingangs geschilderten Art derart zu verbessern, dass mit geringen Veränderungen am Verfahren Bandfehler mit einer vergleichsweise hohen Genauigkeit und Zuverlässigkeit erkannt werden können. Außerdem soll das Verfahren eine hohe Standfestigkeit selbst in der Detektion von mehreren periodischen Fehlern aufweisen können.

Die Erfindung löst die gestellte Aufgabe dadurch, dass das, durch das insbesondere elektromagnetische Messverfahren aufgenommene Zeitsignal unter Anwendung eines modellbasierten Schätzverfahrens, insbesondere unter Anwendung eines Maximum Likelihood Verfahrens, in die Gütefunktion umgewandelt wird.

Wird das Zeitsignal unter Anwendung eines modellbasierten Schätzverfahrens in die Gütefunktion umgewandelt, dann kann im Gegensatz zum Stand der Technik ein periodischer Bandfehler besonders sicher erkannt werden. Mit Hilfe des modellbasierten Schätzverfahrens kann nämlich ein äußerst sensitives stochastisches Verfahren geschaffen werden, wodurch selbst in einem vergleichsweise stark verrauschten Zeitsignal noch periodische Signale erkannt werden können. Eine vergleichsweise hohe Nachweisempfindlichkeit unter Verwendung lediglich eines Zeitsignals kann damit gewährleistet werden, wobei gegebenenfalls diverse Modellunsicherheiten, wie Schlupf, Bandlängenänderungen etc., dabei berücksichtigt werden können. Hinzu kommt, dass dieses Verfahren auch bei elektromagnetischem Messverfahren für besonders vorteilhafte Verfahrensverhältnisse sorgen kann. Es können nämlich aufgrund von Abstandsschwankungen zwischen Sensor und bewegtem Metallband selbst Zeitsignale mit stark schwankenden Rauschabständen und damit versteckten periodischen Signalen sicher auf periodische Anteile bzw. Signale analysiert werden. Das Verfahren ist daher nicht nur vergleichsweise tolerant und standfest gegenüber nachteiligen Messeinflüssen auf das zu analysierende Zeitsignal, sondern kann auch mit einer verbesserten Auflösung für eine vergleichsweise hohe Erkennungsrate bei Bandfehlern sorgen. Besonders kann sich zur Detektion von Fehlern am bewegten Gegenstand bzw. Metallband ein Maximum Likelihood Verfahren auszeichnen. Dieses Verfahren kann sich besonders eignen, einen Schätzer herzuleiten, über den auf ein oder mehrere periodische Signale im Zeitsignal rückgeschlossen werden kann, von welchen Signalen die Periodizität unbekannt ist. Nichtperiodische Störsignale sind damit besonders unterdrückbar, was die Anzahl an erkennbaren Bandfehlern auf einfache Weise erhöhen kann. Außerdem kann sich mit dem erfindungsgemäßen Verfahren die Möglichkeit eröffnen, mehrere periodische Fehler am Gegenstand parallel und ohne gegenseitige Störung derselben zu detektieren. Das erfindungsgemäße Verfahren ist daher nicht nur standfest, sondern auch besonders flexibel und einfach anwendbar.

Im Allgemeinen wird beispielsweise erwähnt, dass ein Umwandeln eines Zeitsignals in eine Gütefunktion ermöglicht werden kann, indem

- über eine Fourier-Transformation aus einem Zeitsignal ein quadriertes Betragsspektrum berechnet wird und
- dann für alle möglichen Grundperioden/Grundfrequenzen eine Gütefunktion bestimmt wird, die eine Addition des quadrierten Betragsspektrums bei der Grundfrequenz und allen ganzzahligen Vielfachen ist.

Die Sensibilität des Verfahrens hinsichtlich periodisch auftretender Fehler im Zeitsignal kann weiter erhöht werden, wenn beim modellbasierten Schätzverfahren mindestens ein Merkmal des fehlerspezifischen Signals berücksichtigt wird. Erfindungsgemäß kann damit nämlich die Gütefunktion eine Gewichtung beinhalten, eine neue Berechnungsvorschrift für die Gütefunktion ergeben oder zu einer neuen mathematische Struktur führen, und so höchste Erkennungsraten von periodisch auftretenden Fehlern am Gegenstand ermöglichen. Insbesondere ein mathematisches Modell vom Signalverlauf kann sich zur Ausbildung dieser Gewichtung auszeichnen, um die Gütefunktion auf den periodisch auftretenden Fehler zu sensibilisieren. Es ist jedoch vorstellbar, andere Merkmale des Signals beim modellbasierten Schätzverfahren zu berücksichtigen. Erfindungsgemäß kann damit das Verfahren besonders standfest gegenüber Störungen ausgebildet werden und äußerst reproduzierbar Walzzeichen bzw. Bandfehler an einem metallischen Band, insbesondere Blech, erkennen.

Einfache Verfahrensverhältnisse können sich weiter ergeben, wenn das Zeitsignal einer Integraltransformation, insbesondere einer Fourier-Transformation, unterworfen wird. Außerdem kann damit ein äußerst schnelles Verfahren sichergestellt werden.

Wird für das magnetinduktive Messverfahren ein elektromagnetischer Sensor mit Hilfe wenigstens eines Luftkissens über dem Gegenstand positioniert, so kann damit die Auflösung deutlich erhöht werden. Messbedingte Schwankungen im Rauschabstand können in ihrer Anzahl reduziert werden, weil durch das Luftkissen Abstandsschwankungen bedingt durch Bandbewegungen vom oder zum Sensor ausgleichbar werden können.

Die Reproduzierbarkeit des Verfahrens kann noch weiter verbessert werden, indem wenigstens zwei am Gegenstand gemessene Zeitsignale verwendet werden, mindestens eine in beiden Zeitsignalen vorkommende Störung zu erkennen und im Verfahren zu unterdrücken. Es kann nämlich davon ausgegangen werden, dass ein periodisch auftretender Fehler nur in einem der beiden Zeitsignale eine Auswirkung hat. Störungen treten jedoch in beiden Zeitsignalen gleichermaßen auf, was erkannt werden kann. Alternativ kann auch vorstellbar sein, mindestens zwei unterschiedliche Zeitbereiche eines Zeitsignals zu verwenden, mindestens eine in den beiden Zeitbereichen des Zeitsignals vorkommende Störung zu erkennen und im Verfahren zu unterdrücken. Erfindungsgemäß können damit Störsignale in jenem Zeitsignal, das das fehlerspezifische Signal aufweist, unterdrückt werden, was die Auflösung des Verfahrens noch weiter steigern kann. Walzzeichen bzw. Bandfehler an einem metallischen Band, insbesondere Blech, können so vom Verfahren äußerst sicher erkannt werden.

Einfache Verfahrensverhältnisse können sich ergeben, wenn die Störung durch eine adaptive Filterung unterdrückt wird.

Wird für das Messverfahren der Sensor über die Breite des Gegenstands bewegt, dann kann ein vergleichsweise breiter Gegenstand auf einfache Verfahrensweise auf Fehler untersucht werden. Zu diesem Zweck muss lediglich in einer Bewegungsstellung des Sensors wenigstens ein Zeitsignal aufgenommen werden, bevor der Sensor weiterbewegt wird. Damit können die Fehler, die durch deren Periodizität streifenartig in Längsrichtung des Gegenstands angeordnet sind, mit einfachen Verfahrensschritten erfasst werden. Außerdem kann mit einem Sensor auf einen Abgleich der Sensoren untereinander verzichtet werden, so dass das erfindungsgemäße Verfahren auch vergleichsweise einfach handhabbar sein kann.

Für das Messverfahren können auch mehrere zueinander versetzt angeordnete Sensoren gegenüber dem Gegenstand angeordnet sein und jeweils Zeitsignale vom Metallband aufnehmen. Damit kann eine schnelle Detektion von Fehlern ermöglicht werden, weil eine parallele Signalauswertung bzw. -bewertung erfolgen kann. Derartige Verfahren können sich insbesondere in kontinuierlichen Herstellungsverfahren von Metallblechen auszeichnen.

Die Verwendung eines modellbasierten Schätzverfahrens, insbesondere ein Maximum Likelihood Verfahrens, kann sich insbesondere zur Berechnung einer Gütefunktion für ein, von einem bewegten Gegenstand mit Hilfe eines elektromagnetischen Messverfahrens aufgenommenen Zeitsignals zur Detektion von periodischen Fehlern am Gegenstand besonders auszeichnen.

Die Erfindung hat sich außerdem die Aufgabe gestellt, eine Vorrichtung der eingangs geschilderten Art zu schaffen, mit der eine hohe Nachweisempfindlichkeit, insbesondere auch bei kleinen Fehlern standfest erkannt werden kann. Außerdem soll die Vorrichtung konstruktiv einfach sein.

Die Erfindung löst die gestellte Aufgabe hinsichtlich der Vorrichtung dadurch, dass der Speicher Daten zu einem modellbasierten Schätzverfahren, insbesondere einem Maximum Likelihood Verfahren, aufweist, wobei die Recheneinheit mit dem Speicher zum Umwandeln des insbesondere durch ein elektromagnetisches Messverfahren aufgenommenen Zeitsignals unter Anwendung des modellbasierten Schätzverfahrens, insbesondere unter Anwendung eines Maximum Likelihood Verfahrens, in die Gütefunktion verbunden ist.

Weist der Speicher Daten zu einem modellbasierten Schätzverfahren auf, wobei die Recheneinrichtung mit dem Speicher zum Umwandeln des insbesondere durch ein elektromagnetisches Messverfahren aufgenommenen Zeitsignals unter Anwendung des modellbasierten Schätzverfahrens, insbesondere unter Anwendung eines Maximum Likelihood Verfahrens, in die Gütefunktion verbunden ist, dann können selbst kleine Fehler, die mit freiem Auge meist nicht erkennbar sind, am Gegenstand sicher detektiert werden. Mit einer vergleichsweise geringen konstruktiven Änderung, nämlich lediglich an den Daten des Speichers der Recheneinrichtung, kann so eine Vorrichtung mit einer hohen Empfindlichkeit geschaffen werden.

Die Standfestigkeit des Verfahrens kann noch weiter verbessert werden, indem der Speicher Daten zu mindestens einem Merkmal des fehlerspezifischen Signals aufweist, wobei die Recheneinheit mit dem Speicher zur Berücksichtigung dieses Merkmals beim Verfahren zur Detektion von periodischen Fehlern verbunden ist. Damit können nämlich selbst kleinste periodische Signale von einem Messrauschen getrennt bzw. unterschieden werden, weil damit eine Gütefunktion eine Gewichtung beinhalten kann, die eine Sensibilisierung des periodischen Fehlers schaffen kann. Vorteilhaft kann für diese Gewichtung ein mathematisches Modell zum Signalverlauf des fehlerspezifischen Signals verwendet werden. Die Vorrichtung kann daher besonders sicher periodische Fehler am bewegten Gegenstand erkennen.

Diese Empfindlichkeit der Vorrichtung hinsichtlich eines periodischen Fehlers am bewegten Gegenstand kann noch weiter verbessert werden, wenn die Sensoreinrichtung wenigstens zwei Zeitsignale vom Gegenstand misst und wenn die Vorrichtung einen mit der Sensoreinrichtung verbundenen adaptiven Filter zum Unterdrücken wenigstens einer in beiden Zeitsignalen vorkommenden Störung aufweist.

Alternativ kann die Empfindlichkeit der Vorrichtung auch dadurch erhöht werden, indem die Vorrichtung einen mit dem Sensor verbundenen Speicher für wenigstens zwei unterschiedliche Zeitbereiche des Zeitsignals des Sensors umfasst und dass die Vorrichtung einen mit dem Speicher verbundenen adaptiven Filter zum Unterdrücken wenigstens einer in beiden Zeitbereichen des Zeitsignals auftretenden Störung aufweist.

Konstruktive Einfachheit an der Vorrichtung kann sich ergeben, indem die Sensoreinrichtung wenigstens zwei zueinander versetzt angeordnete Sensoren aufweist, um zwei Zeitsignale parallel vom Gegenstand aufzunehmen.

Einfache Konstruktionsverhältnisse zur Positionierung eines Sensors über einem bewegten Gut können sich ergeben, wenn der Sensor in einem Gleitschuh mit Druckauslassöffnungen zum Erzeugen eines Luftkissens zwischen wenigstens dem Sensor und dem Gegenstand vorgesehen ist.

Umfasst die Sensoreinrichtung einen magnetinduktiven Sensor, dann kann sich eine gegenüber Störungen äußerst robuste Vorrichtung ergeben. Außerdem kann mit Hilfe solch eines Sensors eine konstruktive Einfachheit sichergestellt werden.

In den Figuren ist beispielsweise die Erfindung an Hand eines Ausführungsbeispiels dargestellt. Es zeigen

Fig. 1     eine in der Darstellung reduzierte Vorrichtung zur Durchführung des Verfahrens samt Metallband,

Fig. 2     ein Messsignal vom Sensor der Vorrichtung nach Fig. 1,

Fig. 3     ein Zeitsignal des erfindungsgemäßen Verfahrens,

Fig. 4     einen vergrößerten Ausschnitt des Betragsspektrums des Zeitsignals nach Fig. 3,

Fig. 5     eine Gütefunktion aus dem nach Fig.4 gemessenen Zeitsignal zur Detektion von periodischen Fehlern,

Fig. 6     eine Gütefunktion von einem anderen gemessenen Zeitsignal,

Fig. 7     eine zum Unterschied zur nach Fig. 6 dargestellten Gütefunktion gewichtete Gütefunktion,

Fig. 8     eine vergrößerte Ansicht auf den gegenüber dem Metallband positionierten Sensor,

Fig. 9     Varianten zur Anordnung einer Sensoreinrichtung gegenüber dem Metallband,

Fig. 10     die Vorrichtung nach Fig. 1 in gesamter Darstellung und

Fig. 11     eine zur Fig. 10 dargestellten Sensoreinrichtung alternative Sensoreinrichtung.

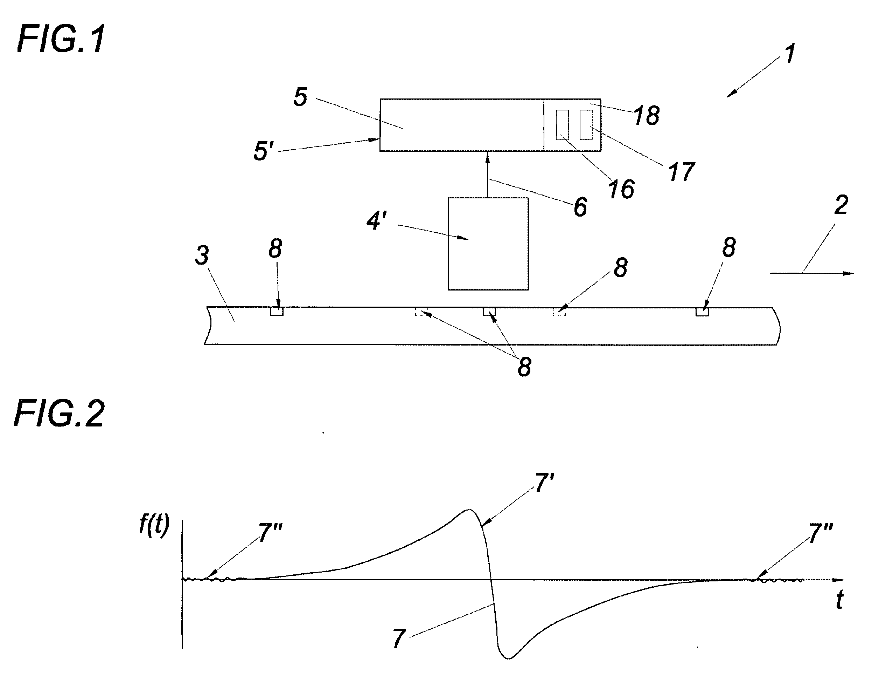

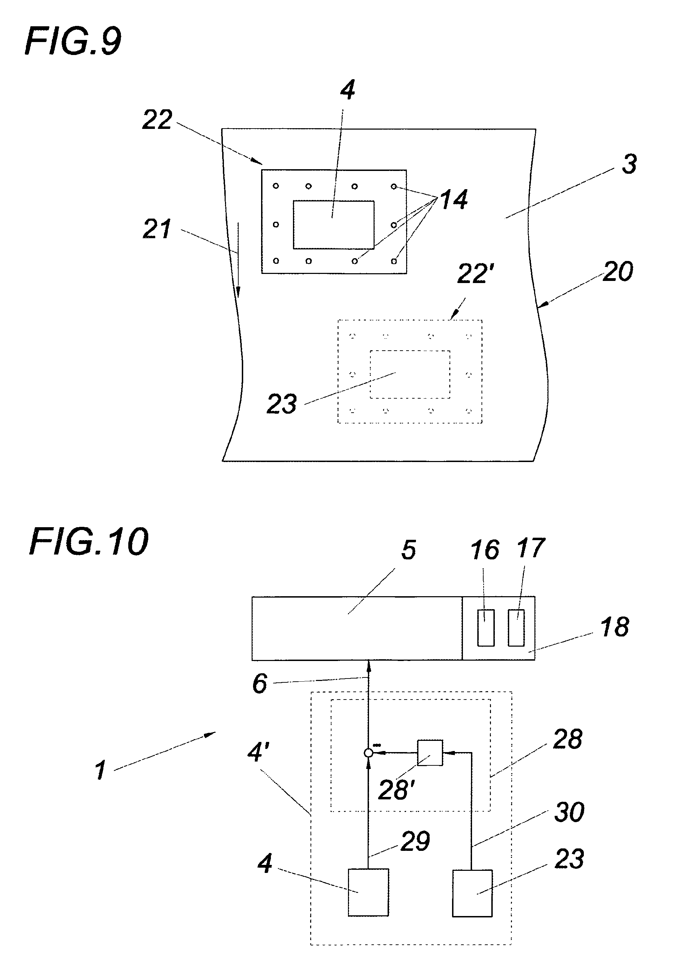

Die nach den Figuren 1 und 10 beispielsweise dargestellte Vorrichtung 1 weist einen, gegenüber einem in Längsrichtung 2 bewegten Gegenstand 3 positionierten und differentiell arbeitenden Sensor 4 einer Sensoreinrichtung 4' auf, wobei der Gegenstand 3 beispielsweise ein Metallband 3 darstellt. Der Sensor 4 ist mit einer Recheneinheit 5 der Recheneinrichtung 5' verbunden und überträgt Messdaten 6, die eine Abhängigkeit von einem Zeitsignal 7, das vom Metallband 3 messtechnisch aufgenommen wird, aufweisen. Das bewegte Metallband 3 weist weiter einen sich wiederholenden Bandfehler 8 auf, der über den Sensor 4 im Zuge des Messverfahrens detektiert wird, wie dies insbesondere in der Fig. 2 anhand des Amplitudenausschlags f(t) erkannt werden kann. Das Zeitsignal 7 setzt sich aus einer Überlagerung von einem periodischen Signal 7' und einem Störungsanteil 7'' zusammen und enthält daher auch ein von einem Bandfehler 8 abhängiges Merkmal. Über ein stochastisches Verfahren wird das Zeitsignal 7 in eine Gütefunktion 9 umgewandelt. Auf Grundlage dieser Gütefunktion 9 wird auf ein periodisches Signal 7' im Zeitsignal 7 rückgeschlossen, um damit den periodisch auftretenden Bandfehler 8 beim Metallband zu detektieren. Diese Bandfehler können an der Oberfläche des Metallbands 3 und/oder auch im Metallband 3 vorkommen. Um erfindungsgemäß eine besonders hohe Robustheit gegenüber messtechnischen Störungen bei magnetinduktiven Messverfahren, sowie eine hohe Detektionsrate an Bandfehlern 8 zu ermöglichen, wird erfindungsgemäß vorgeschlagen, dass das Zeitsignal 7 unter Anwendung eines Maximum Likelihood Verfahrens in die Gütefunktion 9 umgewandelt wird. Insbesondere hat sich für Zeitsignale 7 aus magnetinduktiven Messverfahren das Maximum Likelihood Verfahren als modellbasiertes Schätzverfahren als vorteilhaft herausgestellt.

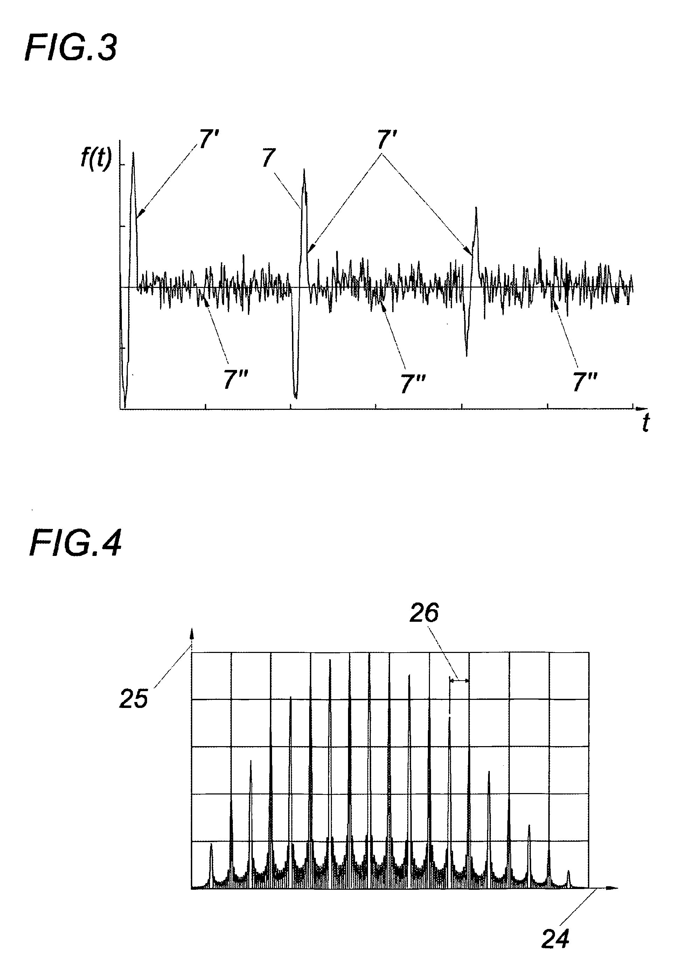

Ein Beispiel für bzw. ein Resultat der Anwendung des Maximum Likelihood Verfahrens zur Berechnung einer Gütefunktion 9 für die Detektion eines periodischen Signals in Gausschem Messrauschen gemäß Fig. 3 kann folgende Formel ergeben (vgl. "Multi Pitch Estimation" - Andreas Jakobsson et al - ISBN 9781598298383):

$$J(\tau) = \sum_{k=1}^{L} \left| X\left(\frac{1}{\tau} \cdot k\right) \right|^2$$

X   stellt die Fouriertransformierte als Integraltransformation des Zeitsignals 7 dar, vorzugsweise rechenzeiteffizient mit dem Fast Fourier Transformationsalgorithmus implementiert.

L   ist die Anzahl der Harmonischen, wobei zur Berechnung/Wahl von L verschiedenste Verfahren in der Literatur bekannt sind.

$\tau$   stellt die möglichen Periodendauern dar, die untersucht werden sollen.

Die Gütefunktion 9 bzw. $J(\tau)$ berechnet sich also als Summe über die Einträge des quadrierten Betragsspektrums, der zu einer möglichen Periodendauer gehörenden Frequenz und ihren Harmonischen, berechnet für alle möglichen Periodendauern. Ein Ausschnitt eines solchen Betragsspektrums ist in Fig. 4 dargestellt, wobei dieses Betragsspektrums über die normalisierte Frequenz 24 auf der einen Seite und über das normalisierte Betragsspektrum 25 auf der anderen Seite aufgetragen ist.

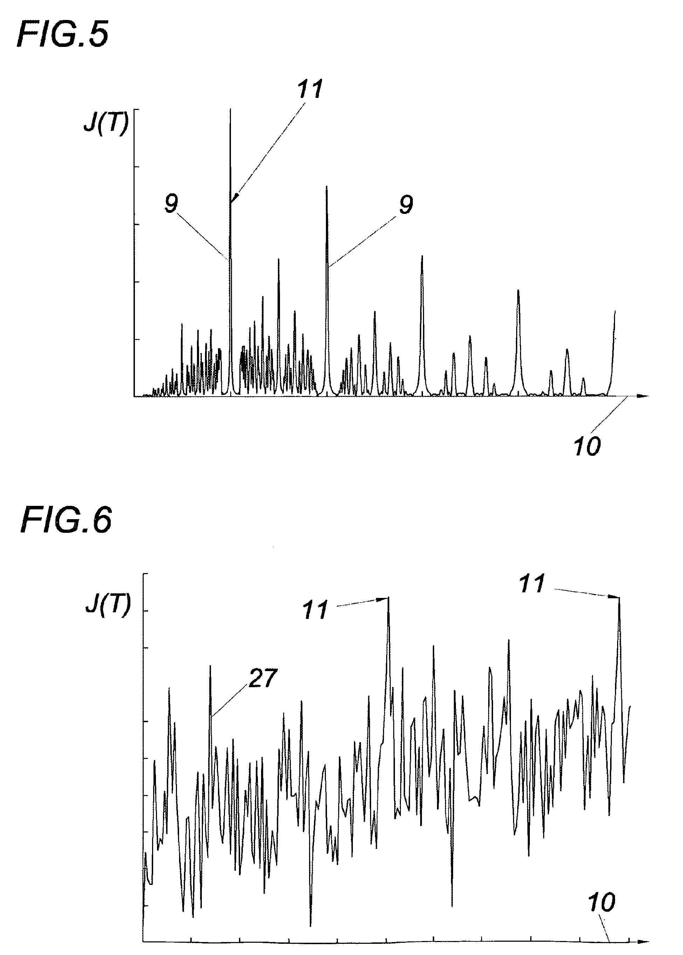

Der Abstand 26 stellt die 1/normalisierte Periodendauer dar. Eine mögliche resultierende Gütefunktion 9 ist in Fig. 5 dargestellt

Diese in Fig. 5 über die normierte Periodendauer 10 aufgetragene normalisierte Gütefunktion 9 weist Maxima 11 auf, anhand welcher Maxima 11 auf ein periodisches Signal 7' im Zeitsignal 7 rückgeschlossen werden kann. Die Position des Maximums 11 der Gütefunktion 9 gibt Auskunft über die Periodizität des Signals 7', während die Höhe der Gütefunktion 9 als Entscheidungskriterium über das Vorhandensein eines periodischen Signals 7' verwendet werden kann.

Ein gemäß Fig. 3 im Zeitsignal 7 vorhandenes periodisches Signal 7' kann daher mit besonders hoher Nachweisempfindlichkeit festgestellt werden. Dies auch dann, wenn wie in Fig. 3 dargestellt, im Signal 7' ein über die Zeit vermindertes Amplitudenmaximum feststellbar ist. Dieser Umstand kann beispielsweise dadurch eintreten, dass sich durch Bandschwingungen die Randbedingungen des Messverfahrens ändern und sich dadurch auch nachteilig der Rauschabstand verringern kann. Für das erfindungsgemäße stochastische Verfahren kann dieser Umstand auf verfahrenstechnisch einfache Weise berücksichtigt werden, so dass dieses Verfahren besonders standfest gegenüber messtechnischen Störungen ist.

Die Auflösung des Verfahrens wird verbessert, indem ein mathematisches Modell, beispielsweise $f_{fehler}=\sin(t)$, zum Signalverlauf des fehlerspezifischen Signals 7' berücksichtigt wird, nämlich beim modellbasierten Schätzverfahren. Die Gütefunktion 9 bzw. $J(\tau)$ beinhaltet dadurch eine Gewichtung, wie dies beispielsweise folgendermaßen dargestellt werden

kann:

$$J(\tau) = \sum_{k=1}^{L} \left| A\left(\frac{1}{\tau} \cdot k\right) \right|^2 \left| X\left(\frac{1}{\tau} \cdot k\right) \right|^2$$

A   stellt ein Gewichtung dar, die sich beispielsweise aus der Fouriertransformierten des als bekannt annehmbaren fehlerspezifischen Signals 7' gebildet werden kann.

Der Verlauf des fehlerspezifischen Signals 7' ist der Fig. 2 zu entnehmen, wonach als Annäherung an den differentiellen Signalverlauf des Sensorsignals ein Sinus herangezogen wird. Es ist jedoch durchaus denkbar, andere Merkmale des fehlerspezifischen Signals 7' bei der Gewichtung der Gütefunktion 9 bzw. $J(\tau)$ zu berücksichtigen.

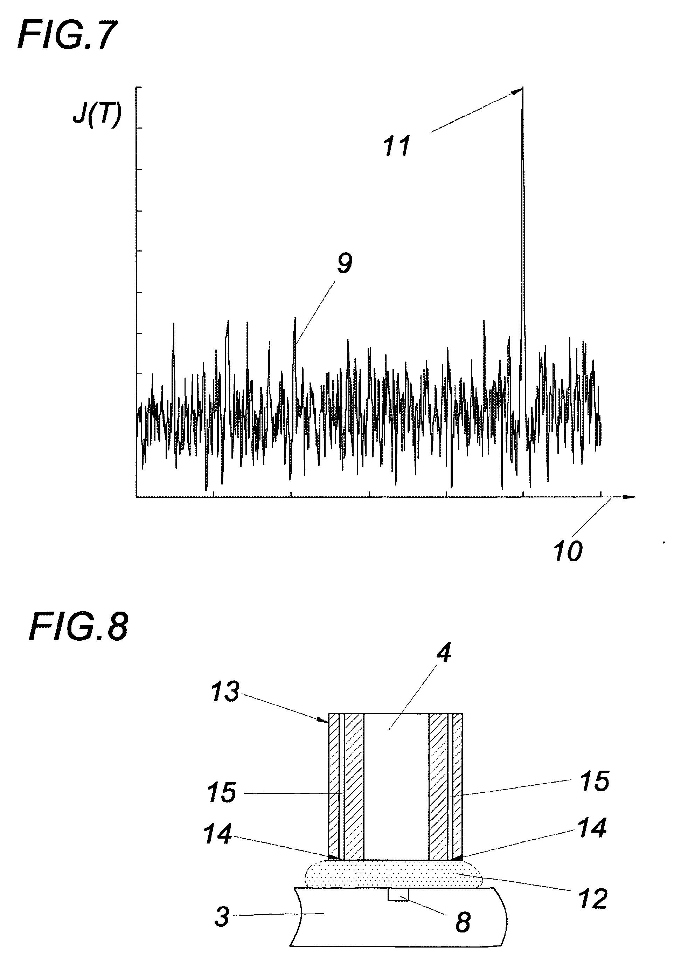

Im Vergleich zwischen den Figuren 6 und 7 kann der Vorteil der Gewichtung besser erkannt werden. In der über die normierte Periodendauer 10 aufgetragenen normalisierten Gütefunktion 27 ist im Vergleich zur nach Fig. 5 dargestellten Gütefunktion 9 nicht eindeutig jenes Maximum 11 zu erkennen, das auf ein periodisches Signal 7' hindeutet. Solch eine Gütefunktion 27 kann beispielsweise durch ein stark verrauschtes Zeitsignal entstehen, welches Zeitsignal nicht näher dargestellt worden ist. Wird nun die Gütefunktion 27 mit Merkmalen des fehlerspezifischen Signals 7' gewichtete, ist in dieser nach Fig. 7 dargestellten Gütefunktion 9 wieder - ähnlich zu Fig. 5 - eindeutig ein Maximum 11 zu erkennen, anhand welchem Maximum 11 auf ein periodisches Signal 7' im Zeitsignal 7 rückgeschlossen werden kann. Auch hier gibt die Position des Maximums 11 der Gütefunktion 9 Auskunft über die Periodizität des Signals 7', während die Höhe der Gütefunktion 9 als Entscheidungskriterium über das Vorhandensein eines periodischen Signals 7' verwendet werden kann. Das vergleichsweise stark verrauschte Zeitsignal, was zu einer Gütefunktion 27 führte, ist mit einer gewichteten Gütefunktion 9 wieder erfolgreich hinsichtlich Walzzeichen bzw. Bandfehler zu analysieren.

Für das magnetinduktive Messverfahren wird der elektromagnetische Sensor 4 mit Hilfe wenigstens eines Luftkissens 12 über dem Gegenstand 3 bzw. dem Metallband positioniert, was insbesondere der Fig. 8 entnommen werden kann. Zu diesem Zweck ist der Sensor 4 konstruktiv einfach in einem Gleitschuh 13 vorgesehen. Der Gleitschuh 13 weist Druckauslassöffnungen 14 auf, die mit einer Druckluftleitung 15 einer nicht näher dargestellten Drucklufteinrichtung zum Erzeugen eines Luftkissens 12 zwischen Sensor 4 und Metallband 3 verbunden sind.

Konstruktive Einfachheit ergibt sich dadurch, dass die Daten 16, 17, die die Recheneinheit 5 zur Durchführung des Verfahrens unter anderem benötigt, in einem Speicher 18 der Recheneinrichtung 5 gespeichert werden. Dadurch kann die Recheneinheit 5 ohne weiteres mit dem Speicher verbinden, um die Daten zum Maximum Likelihood Verfahren abzurufen bzw. dafür zu verwenden, dass das Zeitsignal 7 in die Gütefunktion 9 umgewandelt wird.

Der Speicher 18 weist auch die Daten 17 zum mathematischen Modell $f_{fehler}$ des Signalverlaufs des fehlerspezifischen Signals 7' auf. Daher kann auch die Recheneinheit 5 mit dem Speicher 18 zur Berücksichtigung dieses mathematischen Modells $f_{fehler}$ beim Verfahren zur Detektion von periodischen Fehlern 8 auf konstruktiv einfache Weise verbinden. Eine besonders standfeste Vorrichtung 1 kann dadurch geschaffen werden.

Die über die Breite 20 des Metallbands 3 verteilt auftretenden Fehler 8 können erfasst werden, indem im Zuge des Messverfahrens der Sensor 4 über die Breite 20 des Metallbands 3 bewegt wird, wie dies nach Fig. 9 mit einer Bewegungsrichtung 21 angedeutet worden ist. So kann nun in einer Bewegungsstellung 22 des Sensors 4 ein Zeitsignal 7 aufgenommen werden, um dieses auf periodische Fehler 8 am Metallband 3 zu untersuchen. Anschließend kann der Sensor 4 in eine andere Bewegungsstellung 22' weiterbewegt werden. Dazu kombiniert bzw. dazu alternativ ist vorstellbar, mehrere zueinander versetzt angeordnete Sensoren 4, 23 gegenüber dem Metallband 3 anzuordnen und jeweils Zeitsignale 7 vom Metallband 3 aufnehmen, die dann je auf periodische Zeitsignale 7' analysiert werden.

In Fig. 10 ist die Vorrichtung 1 vollständig dargestellt. Die hier dargestellte Sensoreinrichtung 4' weist neben dem Sensor 4 einen zweiten Sensor 23, sowie einen adaptiven Filter 28 auf. Beide Sensoren 4 und 23 nehmen vom Metallband 3 Messsignale 29 und 30 auf und führen diese dem adaptiven Filter 28 zu, der dann Messdaten 6 an die Recheneinrichtung überträgt. Diese Messdaten 6 weisen die Abhängigkeit vom Zeitsignal 7 auf, das vom Metallband 3 messtechnisch aufgenommen wurde. Da in den Messsignale 29 und 30 die Störung, beispielsweise verursacht durch eine Bandschwankung, gleichermaßen enthalten sind, kann diese aus den Messdaten 6 entfernt werden, wenn diese Messsignale 29 und 30 subtrahiert werden. Zu dieser geeigneten Subtraktion wird Messsignal 30 noch durch geeignete Mittel 28' angepasst. Erfindungsgemäß sind die Messdaten 6 durch den adaptiven Filter 28 nun dahingehend verbessert, dass eine in beiden Zeitsignalen 7 vorkommende Störung unterdrückt ist.

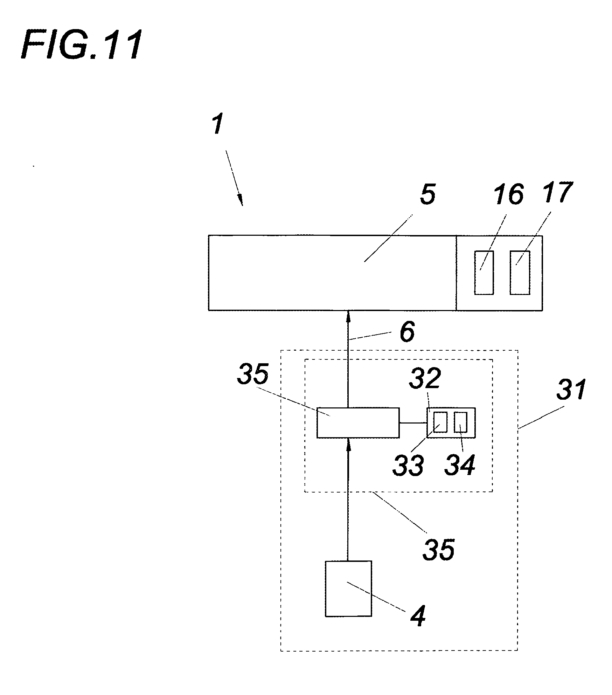

Nach Fig. 11 ist zur Störungsreduktion eine alternative Sensoreinrichtung 31 der Vorrichtung 1 dargestellt. Diese Sensoreinrichtung 31 umfasst einen mit dem Sensor 4 verbundenen Speicher 32 zum Abspeichern wenigstens zweier unterschiedliche Zeitbereiche 33, 34 des Zeitsignals 7 des Sensors 4. Diese Zeitbereiche 33, 34 werden nun einem adaptiven Filter 35 zugeführt, der eine in beiden Zeitbereichen des Zeitsignals auftretende Störung unterdrückt, um damit die Messdaten 6 zu verbessern.

## Patentansprüche

1. Verfahren zur Detektion wenigstens eines periodisch auftretenden Fehlers (8) an einem Gegenstand (3), insbesondere an einem Metallband, bei dem mit einem Messverfahren vom bewegten Gegenstand (3) wenigstens ein Zeitsignal (7) aufgenommen, das Zeitsignal (7) unter Anwendung eines stochastischen Verfahrens in eine Gütefunktion (9) umgewandelt und auf Grundlage dieser Gütefunktion (9) auf ein oder mehrere periodische Signale (7') im Zeitsignal (7) rückgeschlossen wird, um damit wenigstens einen periodisch auftretenden Fehler (8) am Gegenstand (3) festzustellen, **dadurch gekennzeichnet, dass** das, durch das insbesondere elektromagnetische Messverfahren aufgenommene Zeitsignal (7) unter Anwendung eines modellbasierten Schätzverfahrens, insbesondere unter Anwendung eines Maximum Likelihood Verfahrens, in die Gütefunktion (9) umgewandelt wird.

2. Verfahren nach Anspruch 1, **dadurch gekennzeichnet, dass** beim modellbasierten Schätzverfahren mindestens ein Merkmal vom fehlerspezifischen Signal (7'), insbesondere ein mathematisches Modell ($f_{fehler}$) zu seinem Signalverlauf, berücksichtigt wird.

3. Verfahren nach Anspruch 1 oder 2, **dadurch gekennzeichnet, dass** das Zeitsignal (7) einer Integraltransformation, insbesondere einer Fourier-Transformation, unterworfen wird.

4. Verfahren nach Anspruch 1, 2 oder 3, **dadurch gekennzeichnet, dass** für das magnetinduktive Messverfahren ein elektromagnetischer Sensor (4) mit Hilfe wenigstens eines Luftkissens (12) über dem Gegenstand (3) positioniert wird.

5. Verfahren nach einem der Ansprüche 1 bis 4, **dadurch gekennzeichnet, dass** wenigstens zwei gemessene Zeitsignale (7) vom Gegenstand (3) oder mindestens zwei unterschiedliche Zeitbereiche eines Zeitsignals (7) verwendet werden, mindestens eine in beiden Zeitsignalen (7) oder in den beiden Zeitbereichen des Zeitsignals (7) vorkommende Störung zu erkennen und im Verfahren zu unterdrücken.

6. Verfahren nach Anspruch 5, **dadurch gekennzeichnet, dass** das Verfahren die Störung durch eine adaptive Filterung unterdrückt.

7. Verfahren nach einem der Ansprüche 1 bis 6, **dadurch gekennzeichnet, dass** für das Messverfahren der Sensor (4) über die Breite (20) des Gegenstands (3) bewegt wird, wobei in einer Bewegungsstellung (22) des Sensors (4) wenigstens ein Zeitsignal (7) aufgenommen wird, bevor der Sensor (4) weiterbewegt wird.

8. Verfahren nach einem der Ansprüche 1 bis 7, **dadurch gekennzeichnet, dass** für das Messverfahren mehrere zueinander versetzt angeordnete Sensoren (4, 23) gegenüber dem Gegenstand (3) angeordnet sind, und jeweils Zeitsignale (7) vom Gegenstand (3) aufnehmen.

9. Verwendung eines modellbasierten Schätzverfahrens, insbesondere Maximum Likelihood Verfahrens, zur Berechnung einer Gütefunktion (9) für ein, von einem bewegten Gegenstand (3) mit Hilfe eines elektromagnetischen Messverfahrens aufgenommenes Zeitsignal (7) zur Detektion von periodischen Fehlern (8) am Gegenstand (3).

10. Vorrichtung zur Detektion wenigstens eines periodisch an einem bewegten Gegenstand (3), insbesondere an einem Metallband, auftretenden Fehlers (8) mit einer Sensoreinrichtung (4') zur Aufnahme wenigstens eines vom Gegenstand (3) gemessenen Zeitsignals, mit einer mit der Sensoreinrichtung verbundenen, einen Speicher (18) und eine Recheneinheit (5) aufweisenden Recheneinrichtung (5') zum Umwandeln des Zeitsignals (7) unter Anwendung eines stochastischen Verfahrens in eine Gütefunktion (9) und zum Rückschließen auf Grundlage dieser Gütefunktion (9) auf wenigstens ein periodisches Signal (7') im Zeitsignal, um damit wenigstens einen periodisch auftretenden Fehler (8) am Gegenstand (3) festzustellen, **dadurch gekennzeichnet, dass** der Speicher (18) Daten (16) zu einem modellbasierten Schätzverfahren, insbesondere einem Maximum Likelihood Verfahren aufweist, wobei die Recheneinheit (5) mit dem Speicher (18) zum Umwandeln des insbesondere durch ein elektromagnetisches Messverfahren aufgenommenen Zeitsignals (7) unter Anwendung des modellbasierten Schätzverfahrens, insbesondere unter Anwendung eines Maximum Likelihood Verfahrens, in die Gütefunktion (9) verbunden ist.

11. Vorrichtung nach Anspruch 10, **dadurch gekennzeichnet, dass** der Speicher (18) Daten (17) zu mindestens einem Merkmal des fehlerspezifischen Signals (7'), insbesondere ein mathematisches Modell ($f_{fehler}$) zum Signalverlauf des fehlerspezifischen Signals (7'), aufweist, wobei die Recheneinheit (5) mit dem Speicher (18) zur Berücksichtigung dieses Merkmals beim Verfahren zur Detektion von periodischen Fehlern (8) verbunden ist.

12. Vorrichtung nach Anspruch 10 oder 11, **dadurch gekennzeichnet, dass** die Sensoreinrichtung (4') wenigstens zwei Zeitsignale (7) vom Gegenstand (3) misst und dass die Vorrichtung (1) einen mit der Sensoreinrichtung (4') verbundenen adaptiven Filter (28) zum Unterdrücken wenigstens einer in beiden Zeitsignalen (7) vorkommenden Störung aufweist.

13. Vorrichtung nach Anspruch 10 oder 11, **dadurch gekennzeichnet, dass** die Vorrichtung (1) einen mit dem Sensor (4) verbundenen Speicher (32) für wenigstens zwei unterschiedliche Zeitbereiche (33, 34) des Zeitsignals (7) des Sensors (4) umfasst und dass die Vorrichtung (1) einen mit dem Speicher (32) verbundenen adaptiven Filter (35) zum Unterdrücken wenigstens einer in beiden Zeitbereichen (33, 34) des Zeitsignals (7) auftretenden Störung aufweist.

14. Vorrichtung nach einem der Ansprüche 10 bis 13, **dadurch gekennzeichnet, dass** der Sensor (4) in einem Gleitschuh (13) mit Druckauslassöffnungen (14) zum Erzeugenden eines Luftkissens (12) zwischen wenigstens dem Sensor (4) und dem Gegenstand (3) vorgesehen ist.

15. Vorrichtung nach einem der Ansprüche 10 bis 14, **dadurch gekennzeichnet, dass** die Sensoreinrichtung (4') einen magnetinduktiven Sensor (4) umfasst.

**Claims**

1. A method for detecting at least one periodically occurring defect (8) on an object (3), more particularly a metal strip, in which at least one time signal (7) is recorded from the moving object (3) using a measuring method, the time signal (7) is converted into a quality function (9) using a stochastic method, and one or more periodic signals (7') in the time signal (7) are inferred on the basis of said quality function (9) in order to thereby determine at least one periodically occurring defect (8) on the object (3), **characterized in that** the time signal (7) recorded by means of the measuring method, more particularly the electromagnetic measuring method, is converted into the quality function (9) by using a model-based estimation method, more particularly by using a maximum likelihood method.

2. A method according to claim 1, **characterized in that** in the model-based estimation method at least one feature of the defect-specific signal (7') is considered, more particularly a mathematical model ($f_{fehler}$) in connection with its signal characteristic.

3. A method according to claim 1 or 2, **characterized in that** the time signal (7) is subjected to integral transformation, more particularly a Fourier transformation.

4. A method according to claim 1, 2 or 3, **characterized in that** an electromagnetic sensor (4) is positioned by means of at least one air cushion (12) above the object (3) for the magneto-inductive measuring method.

**5.** A method according to one of the claims 1 to 4, **characterized in that** at least two measured time signals (7) of the object (3) or at least two different time ranges of a time signal (7) are used in order to recognise at least one interference occurring in the two time signals (7) or in both time ranges of the time signal (7) and to suppress it in the method.

**6.** A method according to claim 5, **characterized in that** the method suppresses the interference by adaptive filtering.

**7.** A method according to one of the claims 1 to 6, **characterized in that** for the measuring method the sensor (4) is moved over the width (20) of the object (3), wherein at least one time signal (7) is recorded in the movement position (22) of the sensor (4) before the sensor (4) is moved further.

**8.** A method according to one of the claims 1 to 7, **characterized in that** for the measuring method several sensors (4, 23) arranged in an offset manner with respect to each other are arranged opposite of the object (3), and respectively record time signals (7) of the object (3).

**9.** The use of a model-based estimation method, more particularly the maximum likelihood method, for calculating a quality function (9) for a time signal (7) recorded from a moved object (3) by means of an electromagnetic measuring method for the detection of periodic defects (8) on the object (3).

**10.** An apparatus for detecting at least one periodically occurring defect (8) on an object (3), more particularly a metal strip, comprising a sensor device (4') for recording at least one time signal measured from the object (3), a computing device (5') which is connected to the sensor device and comprises a memory (18) and a computing unit (5) for converting the time signal (7) by using a stochastic method into a quality function (9) and for drawing conclusions on the basis of said quality function (9) on at least one periodic signal (7') in the time signal in order to thereby determine at least one periodically occurring defect (8) on the object (3), **characterized in that** the memory (18) comprises data (16) on a model-based estimation method, more particularly a maximum likelihood method, wherein the computing unit (5) is connected to the memory (18) for converting the time signal (7) recorded in more particularly by an electromagnetic measuring method into the quality function (9) by using the model-based estimation method, more particularly by using a maximum likelihood method.

**11.** An apparatus according to claim 10, **characterized in that** the memory (18) comprises data (17) on at least one feature of the defect-specific signal (7'), more particularly a mathematical model ($f_{fehler}$) on the signal characteristic of the defect-specific signal (7'), wherein the computing unit (5) is connected to the memory (18) for considering said feature in the method for the detection of periodic defects (8).

**12.** An apparatus according to claim 10 or 11, **characterized in that** the sensor device (4') measures at least two time signals (7) of the object (3), and the apparatus (1) comprises an adaptive filter (28) connected to the sensor device (4') for suppressing at least one interference occurring in both time signals (7).

**13.** An apparatus according to claim 10 or 11, **characterized in that** the apparatus (1) comprises a memory (32) connected to the sensor (4) for at least two different time ranges (33, 34) of the time signal (7) of the sensor (4), and the apparatus (1) comprises an adaptive filter (35) connected to the memory (32) for suppressing at least one interference occurring in both time ranges (33, 34) of the time signal (7).

**14.** An apparatus according to one of the claims 10 to 13, **characterized in that** the sensor (4) is provided in a slide shoe (13) with pressure outlet openings (14) for generating an air cushion (12) between at least the sensor (4) and the object (3).

**15.** An apparatus according to one of the claims 10 to 14, **characterized in that** the sensor device (4') comprises a magneto-inductive sensor (4).

**Revendications**

**1.** Procédé de détection d'au moins un défaut (8) apparaissant périodiquement sur un objet (3), en particulier sur un feuillard métallique où, avec un procédé de mesure, au moins un signal de temps (7) est enregistré à partir de l'objet (3) en mouvement ; Ce signal de temps (7) est converti en une fonction de puissance (9) à l'aide d'une méthode stochastique, et sur la base de cette fonction de puissance (9), un ou plusieurs signaux périodiques (7') sont déduits du signal de temps (7), afin de détecter au moins un défaut (8) apparaissant périodiquement sur l'objet (3), **caractérisé en ce que** le signal de temps (7), enregistré par un procédé de mesure, en particulier un procédé de mesure électromagnétique, en utilisant une méthode d'estimation basée sur un modèle, en particulier en appliquant la méthode du maximum de vraisemblance, est converti en fonction de puissance (9).

2. Procédé selon revendication 1, **caractérisé en ce qu'**avec la méthode d'estimation basée sur un modèle, au moins une caractéristique est prise en compte à partir du signal spécifique de défaut (7'), en particulier un modèle mathématique ($f_{défaut}$) pour son onde de signal.

3. Procédé selon revendication 1 ou 2, **caractérisé en ce que** le signal de temps (7) est soumis à une transformation intégrale, en particulier à une transformation de Fourier.

4. Procédé selon revendication 1, 2 ou 3, **caractérisé en ce que**, pour le procédé de mesure magnéto-inductive, un capteur (4) électromagnétique est positionné à l'aide d'au moins un coussin d'air (12) au-dessus de l'objet (3).

5. Procédé selon l'une des revendications 1 à 4, **caractérisé en ce qu'**au moins deux signaux de temps (7) mesurés à partir de l'objet (3) ou au moins deux plages de temporisation différentes d'un signal de temps (7) sont appliqués, pour reconnaître au moins un dérangement apparaissant dans les deux signaux de temps (7) ou dans les deux plages de temporisation du signal de temps (7) et supprimer dans le procédé.

6. Procédé selon revendication 5, **caractérisé en ce que** le procédé supprime le dérangement par un filtrage adaptatif.

7. Procédé selon les revendications 1 à 6, **caractérisé en ce que**, pour le procédé de mesure, le capteur (4) est déplacé sur la largeur (20) de l'objet (3) où dans une position de déplacement (22) du capteur (4) au moins un signal de temps (7) est enregistré, avant que le capteur (4) ne poursuive son déplacement.

8. Procédé selon l'une des revendications 1 à 7, **caractérisé en ce que**, pour le procédé de mesure, plusieurs capteurs (4, 23) disposés de manière décalée, sont agencés en face de l'objet (3) et reçoivent chaque signal de temps (7) à partir de l'objet (3).

9. Application d'une méthode d'estimation basée sur un modèle, en particulier la méthode du maximum de vraisemblance, pour le calcul d'une fonction de puissance (9) pour un signal de temps (7) enregistré à partir d'un objet en mouvement (3) à l'aide d'un procédé de mesure électromagnétique de détection des défauts périodiques (8) sur l'objet (3).

10. Dispositif de détection d'au moins un défaut (8) apparaissant périodiquement sur un objet (3) en mouvement, en particulier sur un feuillard métallique, avec un dispositif de détection (4') pour l'enregistrement d'au moins un signal de temps mesuré à partir de l'objet (3), avec un dispositif calculateur (5') relié au dispositif de détection et présentant une mémoire (18) et une unité de calcul (5), pour convertir le signal de temps (7) à l'aide d'une méthode stochastique, en fonction de puissance (9) et pour déduire, sur la base de cette fonction de puissance (9) au moins un signal périodique (7'), du signal de temps, afin de détecter au moins un défaut (8) apparaissant périodiquement sur l'objet (3), **caractérisé en ce que** la mémoire (18) présente des données (16) à un procédé d'estimation basé sur un modèle, en particulier la méthode du maximum de vraisemblance où l'unité de calcul (5) est reliée à la mémoire (18) pour convertir le signal de temps (7), enregistré par un procédé de mesure, en particulier un procédé de mesure électromagnétique, à l'aide d'une méthode d'estimation basée sur un modèle, en particulier la méthode du maximum de vraisemblance, en fonction de puissance (9).

11. Dispositif selon revendication 10, **caractérisé en ce que** la mémoire (18) présente des données (17) à au moins une caractéristique du signal spécifique de défaut (7'), en particulier un modèle mathématique ($f_{défaut}$) pour l'onde de signal du signal spécifique de défaut (7') où l'unité de calcul (5) est reliée à la mémoire (18) pour la prise en compte de cette caractéristique lors du procédé de détection de défauts périodiques (8).

12. Dispositif selon revendication 10 ou 11, **caractérisé en ce que** le dispositif de détection (4') mesure au moins deux signaux de temps (7) à partir de l'objet (3), et **en ce que** le dispositif (1) présente un filtre (28) adaptatif relié au dispositif de détection (4') pour supprimer au moins un dérangement apparaissant dans l'un des deux signaux de temps (7).

13. Dispositif selon revendication 10 ou 11, **caractérisé en ce que** le dispositif (1) comprend une mémoire (32) reliée au capteur (4) pour au moins deux plages de temporisation (33, 34) différentes du signal de temps (7) du capteur (4) et **en ce que** le dispositif (1) présente un filtre (35) adaptatif relié à la mémoire (32) pour supprimer au moins un des dérangements apparaissant dans les deux plages de temporisation (33, 34) du signal de temps (7).

14. Dispositif selon l'une des revendications 10 à 13, **caractérisé en ce que** le capteur (4) est prévu dans un patin glissant (13) avec ouvertures de sortie sous pression (14) pour produire un coussin d'air (12) entre au moins le capteur (4) et l'objet (3).

15. Dispositif selon l'une des revendications 10 à 14, **caractérisé en ce que** le dispositif de détection (4')
comprend un capteur magnéto-inductif (4).

**FIG.1**

**FIG.2**

## *FIG.3*

## *FIG.4*

## FIG.5

## FIG.6

## FIG.7

## FIG.8

# FIG.9

# FIG.10

## FIG.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3855913 T2

**In der Beschreibung aufgeführte Nicht-Patentliteratur**

- **ANDREAS JAKOBSSON et al.** *Multi Pitch Estimation,* ISBN 9781598298383